# EUROPÄISCHE PATENTSCHRIFT

(11) **EP 1 786 658 B1**
(45) Veröffentlichungstag und Bekanntmachung des Hinweises auf die Patenterteilung: **23.12.2009**
(21) Anmeldenummer: 04803105.8
(22) Anmeldetag: 05.11.2004
(51) Int. Cl.: B62D 25/08, B60K 11/04

(54) **Vorrichtung zur befestigung eines Wärmeübertragers, insbesondere eines Kühlmittelkühlers für Kraftfahrzeuge**
Device for fixing a heat transfer device, in particular a coolant radiator for motor vehicles
Installation pour fixer un dispositif caloporteur, notamment un radiateur pour agent refrigerant de vehicules automobiles

(30) Priorität: 08.09.2004 DE 102004043354
(43) Veröffentlichungstag der Anmeldung: 23.05.2007
(73) Patentinhaber: HBPO GmbH, 59552 Lippstadt (DE)
(72) Erfinder: HEMMERSMEIER, Ralf, 59557 Lippstadt (DE)
(74) Vertreter: Heumann, Christian
(86) Internationale Anmeldenummer: PCT/EP2004/012531
(87) Internationale Veröffentlichungsnummer: WO 2006/027024

(56) Entgegenhaltungen:
- US-A1- 2004 089 769
- US-B1- 6 386 497

## Beschreibung

Die Erfindung betrifft eine Vorrichtung zur Befestigung eines Wärmeübertragers, insbesondere eines Kühlmittelkühlers nach dem Oberbegriff des Patentanspruches 1.

Wärmeübertrager für Kraftfahrzeuge, insbesondere Kühlmittelkühler und Kältemittelkondensatoren werden heute vielfach in ein so genanntes Frontmodul eingebaut, welches aus einem Montageträger, den Wärmeübertragem und Scheinwerfern besteht. Der Montageträger bildet dabei eine im Wesentlichen rahmenförmig ausgebildete Struktur, insbesondere aus Kunststoff, an welcher die einzelnen Komponenten wie Wärmeübertrager, Lüfterzarge und Gebläse befestigt werden. Das gesamte Frontmodul wird nach Fertigstellung in den vorderen Motorraum des Kraftfahrzeuges eingesetzt und dort befestigt.

Durch die DE 100 51 567 A1 wurde ein solches Frontmodul mit einem rahmenförmigen Montageträger bekannt, in welchem ein Kühlmittelkühler zusammen mit einem Kondensator befestigt ist. An der Oberseite und der Unterseite des Kühlers sind mittels Stiften Gummibuchsen angebracht, welche direkt in entsprechende Öffnungen des Montageträgers eingesetzt werden. Im oberen Querträger des Montageträgers sind schlüssellochartige Öffnungen, d. h. Schlitze vorgesehen, in welche die oberen Gummibuchsen, die trommelförmig ausgebildet sind, eingesetzt werden. Der Kühler wird somit von hinten, d. h. von der Motorseite des Kraftfahrzeuges montiert und ist auch nur von der hinteren Seite demontierbar, was infolge der beschränkten Raumverhältnisse nachteilig ist. Darüber hinaus ist diese Art von Lagerung statisch unbestimmt, da obere und untere Lager gegeneinander verspannt sind - dies kann zu unerwünschten Schwingungen und erhöhten Beanspruchungen des Frontmoduls führen.

Durch die US 200410089769 A1 wurde eine Tragstruktur nach dem Oberbegriff von Anspruch 1 bekannt, welche frontseitig in einem Kraftfahrzeug angeordnet ist und der Befestigung von zwei oberen Lagern eines Wärmeübertragers, insbesondere eines Kühlmittelkühlers dient. Die Tragstruktur weist einen oberen Querträger auf, an dessen Unterseite Befestigungsnischen zur Aufnahme der Kühlerlager angeordnet sind. In den Nischen sind jeweils zangenförmige Klemm- und Rastelemente angeordnet, welche einen Gummiblock des Kühlerlagers umfassen und zwischen zangenförmigen Schenkeln einklemmen. Der Kühler ist somit im Wesentlichen reibschlüssig an der Tragstruktur befestigt. Das zangenförmige Klemm- und Rastelement wird vor der Montage des Kühlers in geöffneter Stellung in der Nische positioniert, danach wird der Kühler mit Gummiblock zwischen die Zangenschenkel gedrückt, sodass diese eine Schließbewegung ausführen und den Gummiblock zwischen sich einklemmen.

Durch die US 6,386,497 B1 wurde eine Anordnung zur Befestigung eines Kühlmittelkühlers an einem oberen Querträger eines Fahrzeuges bekannt. Als Befestigungselement dient ein elastischer Clip mit zwei gabelförmigen, elastischen Armen, welche eine Gummibuchse teilweise umgreifen, die ihrerseits auf einem Lagerzapfen des Kühlers angeordnet ist. Bei der Montage wird zunächst das Befestigungselement in den Querträger eingesetzt, und danach wird der Kühler mit seinen beiden oberen Lagern derart beigeklappt, dass die auf den Lagerzapfen angeordneten Gummibuchsen in die elastischen Arme des Clips hineingedrückt und dort reibschlüssig gehalten werden.

Es ist Aufgabe der vorliegenden Erfindung, eine Vorrichtung der eingangs genannten Art dahingehend zu verbessern, dass einerseits eine vereinfachte Montage und Demontage des Wärmeübertragers, insbesondere des Kühlmittelkühlers möglich ist und andererseits eine statisch bestimmte Lagerung erreicht wird.

Diese Aufgabe wird durch die Merkmale des Patentanspruches 1 gelöst. Erfindungsgemäß ist vorgesehen, dass der Wärmeübertrager bzw. Kühlmittelkühler oben über zusätzliche Halter, so genannte Zwischenhalter mit dem Montageträger verbunden ist. Der Kühler weist somit zwei Zwischenhalter auf, welche auf Lagerzapfen des Kühlers aufgesetzt und mit diesem montiert werden. Die Zwischenhalter stellen somit Verbindungselemente zwischen Kühler und Montageträger dar, welche an die Einbauverhältnisse angepasst sind. Darüber hinaus ergibt sich für den Wärmeübertrager bzw. Kühler insofern eine Vereinfachung, als dieser lediglich standardisierte Lagerzapfen aufweisen muss, auf welche die von Fall zu Fall angepassten Zwischenhalter aufgesteckt werden. Ferner besteht der Zwischenhalter einerseits aus einem Befestigungsauge, welches eine Buchse aus elastomeren Material, also eine Gummibuchse aufnimmt, und andererseits aus Haltefingern, welche mit dem Montageträger verrastbar sind. Damit wird eine einfache, schnelle Montage erreicht, da der Kühler lediglich beigeklappt werden muss und verrastet. Damit bilden die

Zwischenhalter obere Kühlerlager, die Bestandteile des Montageträgers werden und sämtliche Lagerkräfte, welche von den oberen Kühlerzapfen ausgehen, in den Montageträger einleiten.

Nach einer weiteren vorteilhaften Ausgestaltung der Erfindung sind die beiden Haltefinger etwa rechtwinklig zur Längsachse der oberen Lagerzapfen angeordnet, d. h. sie ragen etwa waagerecht nach vorne, d. h. in Fahrtrichtung vom Kühler ab. Damit kann der Kühler, ohne zusätzlichen Bauraum nach oben (z-Richtung) zu beanspruchen, durch Beiklappen montiert und verrastet werden. Die Enden der Haltefinger durchsetzen dabei die Vorderseite des Montageträgers, in welcher entsprechende Rastöffnungen vorgesehen sind, in welchen die Haltefinger verrasten. Durch die Verrastung ist vor allem eine Fixierung in Fahrtrichtung (x-Richtung) gegeben.

In weiterer vorteilhafter Ausgestaltung der Erfindung ist jeder Halter gegenüber dem Montageträger nach oben und unten, d. h. in positiver und negativer z-Richtung abgestützt, vorzugsweise verklemmt. Damit ergibt sich der Vorteil, dass der Halter trotz einfacher Montage durch Verrasten spielfrei und fest mit dem Montageträger verbunden ist. Ferner ergibt sich als Vorteil, dass der Kühler von vorne demontiert werden kann, indem lediglich die beiden Rastfinger mittels eines einfachen Werkzeuges aus ihrer Verrastung gelöst werden. Damit werden die oberen Kühlerlager gelöst und der Kühler kann nach hinten (entgegen der Fahrtrichtung) abgekippt und entnommen werden. Dies erleichtert die Demontage - im Falle einer Reparatur - erheblich.

In weiterer vorteilhafter Ausgestaltung der Erfindung sind an den Haltern Hilfsbohrungen vorgesehen, in welche hilfsweise Schrauben eingesetzt werden können. Dies ist eine fail-safe-Maßnahme für den Fall, dass die Rastverbindung versagt. Der Kühler ist dann durch die hilfsweise hergestellte Schraubverbindung noch sicher mit dem Montageträger verbunden.

In weiterer vorteilhafter Ausgestaltung der Erfindung ist der Halter als Kunststoffspritzteil ausgebildet, was den Vorteil geringerer Herstellkosten mit sich bringt.

In weiterer vorteilhafter Ausgestaltung der Erfindung weist zumindest eine Buchse der oberen Kühlerlager ein Langloch auf, so dass ein Spiel quer zur Fahrtrichtung ermöglicht wird. Eine Längsdehnung (der waagerecht liegenden Rohre) des Kühlers wird somit nicht durch die Lager behindert, Spannungen werden vermieden.

In weiterer vorteilhafter Ausgestaltung der Erfindung sind die unteren Lager als Festlager und die oberen Lager als Loslager ausgebildet. Der Kühler ruht somit mit seinem Gewicht auf den unteren Lagern, welche als Gummibuchsen ausgebildet sind und somit sowohl federnde als auch dämpfende Eigenschaften aufweisen. Nach oben ist zwischen dem Kühler und den Zwischenhaltern ein Spiel belassen, so dass Dehnungen in z-Richtung möglich sind. Damit wird der Vorteil einer statisch bestimmten Lagerung für den Kühler und das gesamte Kühlmodul erreicht.

Ein Ausführungsbeispiel der Erfindung ist in der Zeichnung dargestellt und wird im Folgenden näher beschrieben. Es zeigen
- Fig. 1: eine Ansicht von hinten (in Fahrtrichtung) auf ein Frontendmodul,
- Fig. 2: eine Ansicht von vorn (entgegen der Fahrtrichtung) auf das Frontendmodul gemäß Fig. 1,
- Fig. 3: ein unteres Lager für einen Kühlmittelkühler in einem Montageträger,
- Fig. 4: ein oberes Lager für den Kühlmittelkühler mittels Zwischenhalter in einem Schnitt in einer x-z-Ebene,
- Fig. 5: das obere Kühlerlager gemäß Fig. 4 in einem Schnitt in einer y-z- Ebene,
- Fig. 6: einen weiteren Schnitt durch das obere Kühlerlager in einer parallelen x-z-Ebene und
- Fig. 7a und 7b: den Zwischenhalter in perspektivischen Darstellungen.

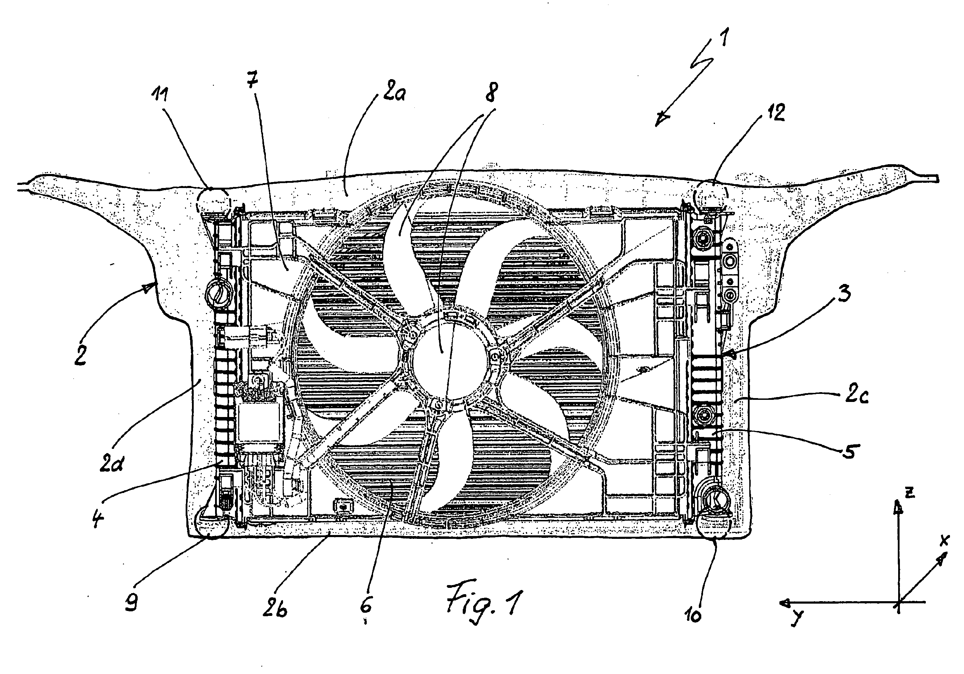

**Fig. 1** zeigt ein Frontendmodul 1 eines Kraftfahrzeuges in einer Ansicht von hinten, d. h. in Fahrtrichtung des Kraftfahrzeuges. In einem Achsenkreuz sind die positiven Achsen x, y, z für das Fahrzeug dargestellt, wobei x der Fahrtrichtung entspricht. Das Frontendmodul 1 weist einen Montageträger 2 auf, der einen geschlossenen Rahmen, bestehend aus einem oberen Querträger 2a, einem unteren Querträger 2b und zwei Seitenteilen 2c, 2d bildet. Im Montageträger 2, d. h. innerhalb des Rahmens 2a, 2b, 2c, 2d ist ein Kühlmittelkühler 3 gelagert, welcher als Querstromkühler ausgebildet ist und zwei seitliche Kühlmittelkästen 4, 5 mit einem zwischen beiden Kühlmittelkästen angeordneten Netz 6 aufweist. Das Netz 6 besteht aus nicht bezeichneten, horizontal angeordneten Rohren und Rippen. In Fahrtrichtung hinter dem Kühlmittelkühler 3 ist eine Lüfterhaube 7 mit einem Lüftergebläse 8 befestigt. Der Kühler 3 ist mittels vier schematisch durch Kreise dargestellten Lagern, zwei unteren Lagern 9, 10 und zwei oberen Lagern 11, 12 gegenüber dem Montageträger 2 abgestützt. Der Kühler 3 ist dabei Träger eines Kühlmoduls, welches die Lüfterhaube 7 und das Lüftergebläse 8 sowie weitere hier nicht sichtbare Wärmeübertrager umfasst.

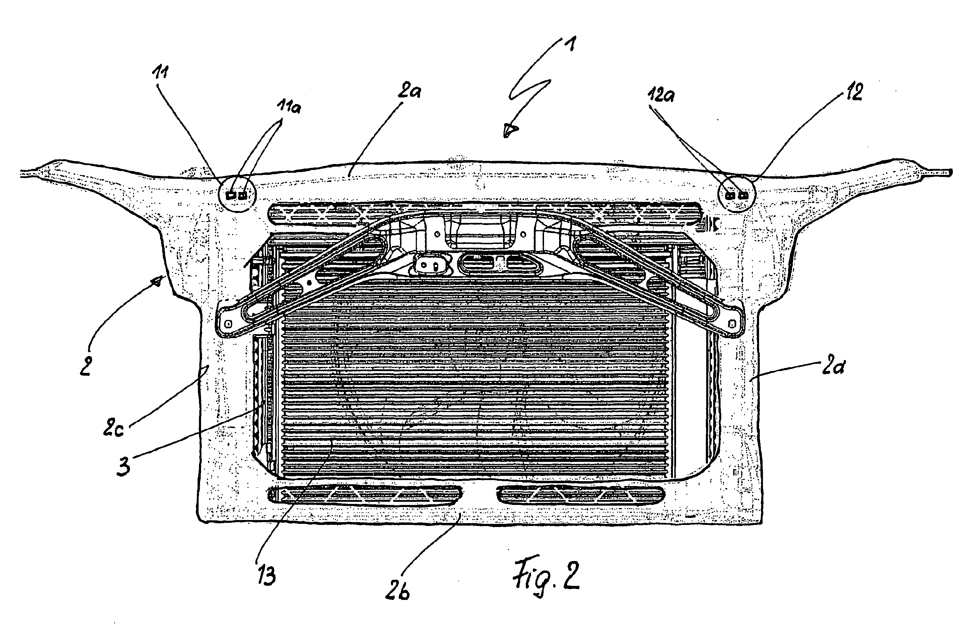

**Fig. 2** zeigt das Frontendmodul 1 gemäß Fig. 1 mit Montageträger 2 in einer Ansicht von vorn, d. h. entgegen der Fahrtrichtung des Kraftfahrzeuges. In Fahrtrichtung vor dem Kühler 3 ist ein Kondensator 13 für eine Klimaanlage angeordnet und auf nicht näher beschriebene Weise mit dem Kühler 3 verbunden. Die beiden oberen Lager 11, 12, schematisch durch Kreise dargestellt, weisen jeweils zwei Rastelemente 11a, 12a auf, welche durch die Vorderseite des oberen Querträgers hindurchgesteckt sind und unten genauer erläutert werden.

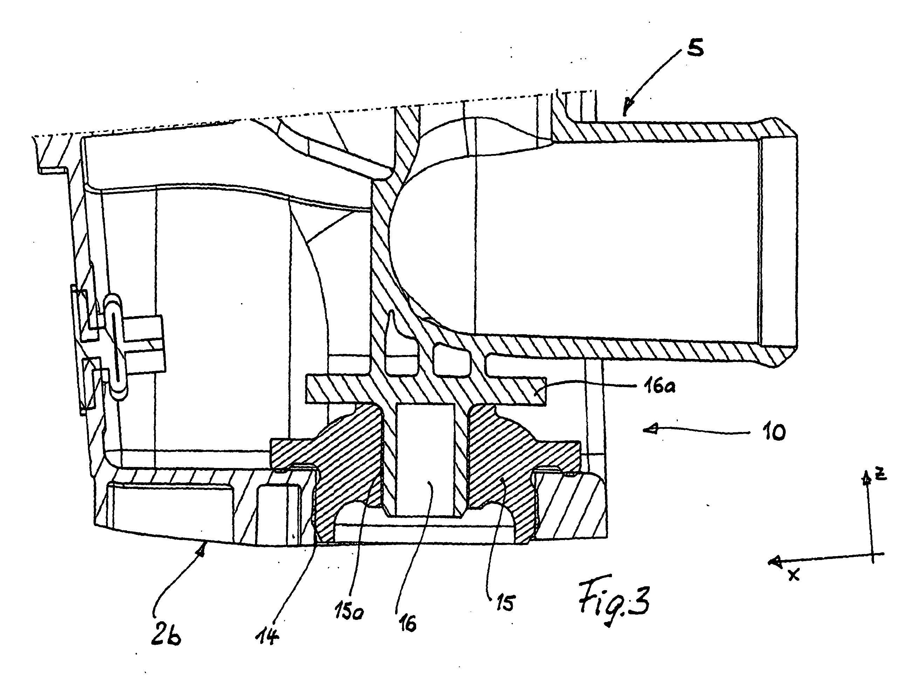

**Fig. 3** zeigt das untere Kühlerlager 10 (vgl. Fig. 1) in einem Schnitt in einer x-z-Ebene. Die Zeichnung zeigt den unteren Querträger 2b, welcher eine Öffnung 14 zur Aufnahme einer Gummibuchse 15 aufweist. Der aus Kunststoff hergestellte Kühlmittelkasten 5 des Kühlmittelkühlers 3 weist in seinem unteren Bereich einen angespritzten Lagerzapfen 16 auf, welcher in eine Öffnung 15a der Gummibuchse 5 eingepresst ist. Die Gummibuchse 15 weist einen umlaufenden Flansch 15b auf, welcher sich auf dem Querträger 2b abstützt. Der Lagerzapfen 16 des Kühlmittelkastens 5 wird nach oben durch eine Platte 16a begrenzt, welche auf der Gummibuchse 15 aufliegt. Letztere ist domartig nach oben ausgewölbt, so dass sich für den Lagerzapfen 16 mit Anschlagplatte 16a ein Federweg in z-Richtung gegenüber dem Querträger 2b ergibt. Gleichzeitig wird durch die Gummibuchse 15, die sowohl mit dem Querträger 2b als auch mit dem Lagerzapfen 16 durch Presssitz fest verbunden ist, eine schwingungsdämpfende Wirkung ausgeübt. Das untere Kühlerlager 9 ist im Wesentlichen gleich ausgebildet, d. h. ebenso in z-Richtung als elastisches Festlager und wird daher nicht als Schnitt dargestellt.

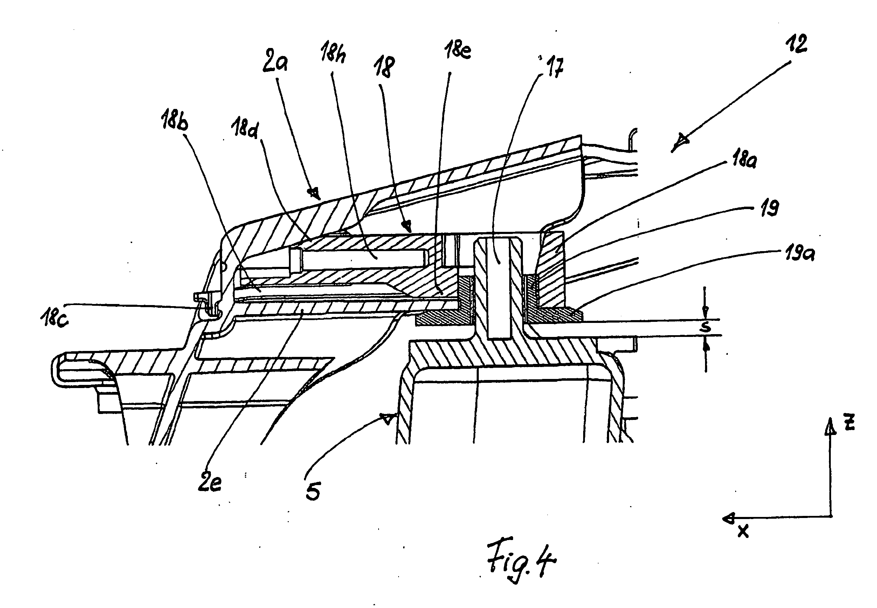

**Fig. 4** zeigt das obere Kühlerlager 12 in einem Schnitt in einer x-z-Ebene - das obere Kühlerlager 11 ist im Wesentlichen gleich ausgebildet, d. h. die nachfolgende Beschreibung gilt auch für das andere obere Kühlerlager. Der Kühlmittelkasten 5 weist einen angespritzten Lagerzapfen 17 auf, welcher etwa senkrecht (z-Richtung) nach oben steht. Im oberen Querträger 2a ist ein Zwischenhalter 18 verrastet und eingeklemmt, der sich etwa in horizontaler Richtung (in x-Richtung) erstreckt und ein Befestigungsauge 18a aufweist. Über eine Gummibuchse 19 im Befestigungsauge 18a nimmt der Zwischenhalter 18 den Lagerzapfen 17 auf und bildet für diesen das obere Lager. Die Gummibuchse 19 ist formschlüssig in dem Befestigungsauge 18a aufgenommen und weist einen unteren Flansch 19a auf, welcher gegenüber der Oberseite des Kühlmittelkastens 5 eine Spalt s bildet - damit ist eine Ausgleichsbewegung des Kühlmittelkastens 5 bzw. des Kühlmittelkühler 3 in z-Richtung, z. B. infolge Wärmedehnung möglich. Der Zwischenhalter 18 ist - wie erwähnt - fest mit dem Montageträger 2 verbunden und leitet somit vom Lagerzapfen 17 eingeleitete Kräfte auf den Montageträger 2 über. Hierzu weist der Zwischenhalter 18 Halte- bzw. Rastfinger 18b auf, welche den Querträger 2a frontseitig durchsetzen und mit einer Rastnase 18c hintergreifen. Damit wird eine Fixierung des Zwischenhalters 18 in x-Richtung erreicht. Die Fixierung in entgegengesetzter x-Richtung erfolgt durch eine schräge Anschlagfläche 18d, welche sich gegenüber der Innenseite des oberen Querträgers 2a abstützt. Eine weitere Abstützung des Haltefingers 18 erfolgt über eine Zwischenrippe 2e und eine Abstütznase 18e am Zwischenhalter 18.

Die Schnittdarstellung zeigt ferner eine Hilfsbohrung 18h, welche mittig im Zwischenhalter 18 angeordnet und nach vorne offen ist. Für den Fall des Versagens der Rastverbindung kann in die Hilfsbohrung 18h von der Frontseite her eine Befestigungsschraube zur Herstellung einer Hilfsbefestigung (fail-safe) eingesetzt werden.

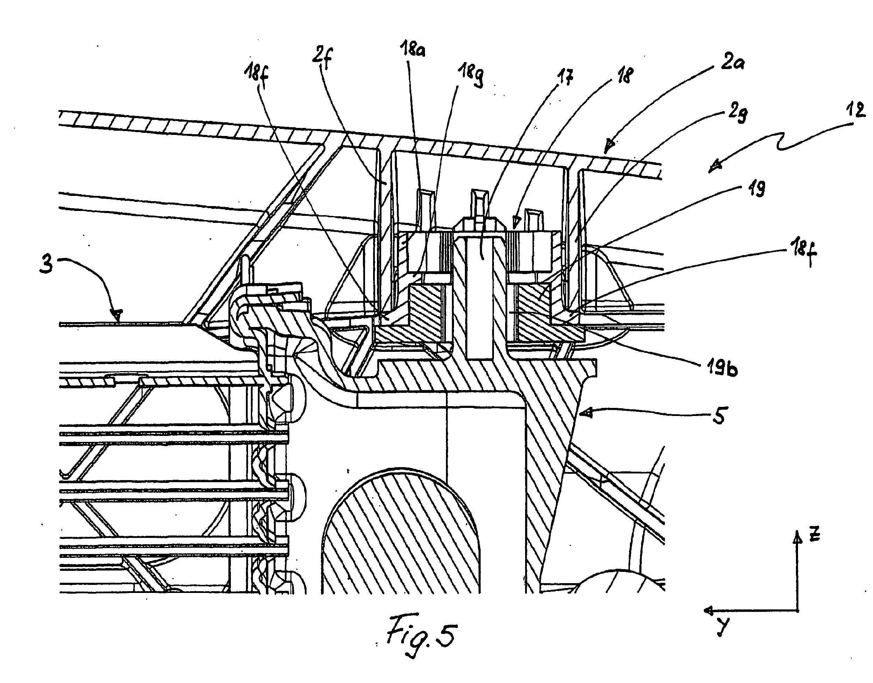

**Fig. 5** zeigt einen weiteren Schnitt durch das obere Kühlerlager in einer y-z-Ebene. Das Befestigungsauge 18a des Zwischenhalters 18 weist in seinem unteren und äußeren Bereich einen Flansch 18f auf, der sich nach oben (in z-Richtung) gegenüber zwei senkrechten Rippen 2f, 2g abstützt, welche vom oberen Querträger 2a abragen. Damit wird eine Fixierung des Zwischenhalters 18 nach oben erreicht. Die Gummibuchse 19 ist formschlüssig im Befestigungsauge 18a gehalten und wird nach oben durch einen radial nach innen ragenden Bund 18g fixiert. Die Gummibuchse 19 weist ein Langloch 19b auf, welches ein Spiel des Lagerzapfens 17 in y-Richtung, d. h. quer zur Fahrtrichtung zulässt. Damit können wärmebedingte Dehnungen des Kühlmittelkühlers 3 ausgeglichen werden.

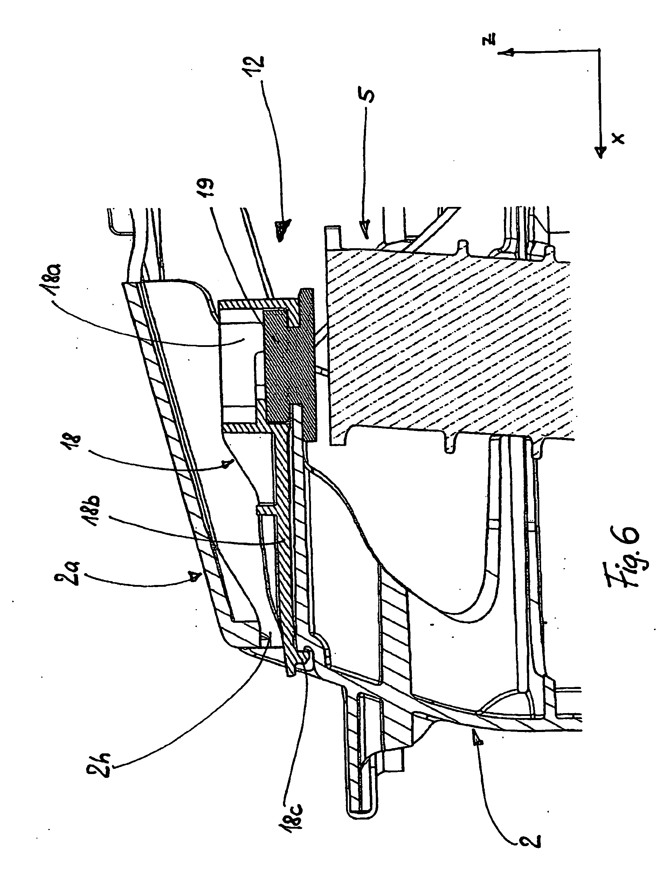

**Fig. 6** zeigt einen weiteren Schnitt durch das obere Kühlerlager 12 in einer x-z-Ebene, allerdings außerhalb des Zapfens 17, jedoch durch den Haltefinger 18b (ein weiterer Haltefinger liegt vor der Zeichenebene). Der Halte- bzw. Rastfinger 18b ist biegeelastisch ausgebildet und durchsetzt mit seinem stirnseitigen Ende eine Rastöffnung 18h im Montageträger 2, wobei die Rastnase 18e die Stirnseite des Montageträgers 2 hintergreift und somit den Zwischenhalter 18 in x-Richtung fixiert. Man erkennt deutlich aus dieser zeichnerischen Darstellung, dass der Rastfinger 18b mit seiner Rastnase 18e leicht nach oben (in z-Richtung) angehoben, wodurch die Verrastung gelöst wird, und nach hinten (entgegen der Fahrtrichtung) hinausgedrückt werden kann. Damit ist eine Zugänglichkeit des oberen Kühlerlagers 12 von vorne, d. h. von der Vorderseite des Frontendmoduls her gegeben und ein Ausbau des Kühlers (bzw. des gesamten Kühlmoduls) durch Abkippen nach hinten und Entnehmen nach oben möglich. Die Zugänglichkeit von vom ist auch in Fig. 2 erkennbar, wo die Rastelemente 11a, 12a dargestellt sind, die den Rastnasen 18e entsprechen.

Die zeichnerische Darstellung in Fig. 6 zeigt ferner, dass die Gummibuchse 9 formschlüssig im Befestigungsauge 18a nach oben und unten in z-Richtung fixiert ist. Damit wird die Gummibuchse 19 ein unverlierbares Teil des Zwischenhalters 18.

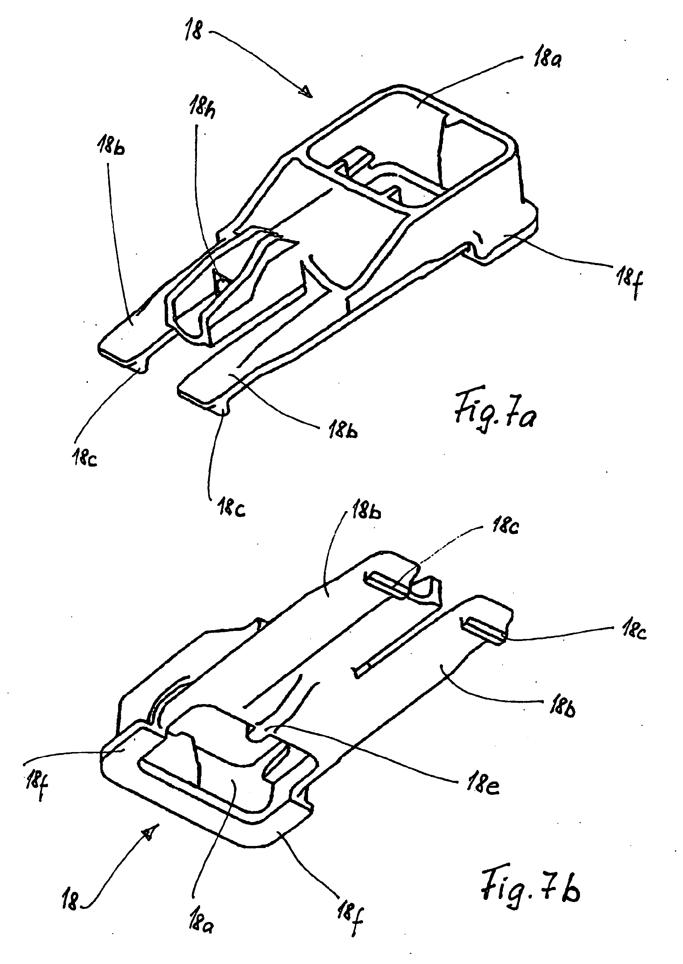

**Fig. 7a** und **7b** zeigen in zwei unterschiedlichen perspektivischen Darstellungen den Zwischenhalter 18 mit zwei Haltefingern 18b und einem Befestigungsauge 18a, in welches - was hier nicht dargestellt ist - die Gummibuchse 19 unverlierbar eingesetzt wird. An den freien Enden der Haltefinger 18b sind die nach unten abragenden Rastnasen 18c in Fig. 7b deutlich erkennbar. Ferner ist der beiderseits des Befestigungsauges 18a angeordnete Flansch 18f sichtbar. Die Abstütznase 18e geht deutlich aus Fig. 7b hervor, sie befindet sich in unmittelbarer Nähe des Befestigungsauges 18a. Ferner ist zwischen den beiden Haltefingern 18b die Hilfsbohrung 18h (vgl. Fig. 4) angeordnet, welche der Aufnahme einer Schraube für eine Hilfsbefestigung dient. Der dargestellte Zwischenhalter 18 ist als Kunststoffspritzteil herstellbar und derart dimensioniert, dass er die auftretenden Lagerkräfte aufnehmen und in den Montageträger weiterleiten kann.

Im dargestellten und beschriebenen Ausführungsbeispiel ist der Montageträger 2 als geschlossener Rahmen mit zwei Querträgern und zwei Seitenteilen ausgebildet. In einer nicht dargestellten Ausführungsform kann der Montageträger auch als U-förmiger, d. h. offener Rahmen mit einem oberen Querträger und zwei Seitenstreben ausgebildet sein. In diesem Falle sind die unteren Lager des Wärmeübertragers bzw. Kühlers an den beiden Seitenstreben angebracht.

### Bezugszeichen:

- 1: Frontendmodul
- 2: Montageträger
- 2a: oberer Querträger
- 2b: unterer Querträger
- 2c: Seitenteil
- 2d: Seitenteil
- 2e: Rippe
- 2g: Rippe
- 2f: Rippe
- 2h: Rastöffnung
- 3: Kühlmittelkühler
- 4: Kühlmittelkasten, links
- 5: Kühlmittelkasten, rechts
- 6: Kühlemetz
- 7: Lüfterhaube
- 8: Lüftergebläse
- 9: unteres Kühlerlager, links
- 10: unteres Kühlerlager, rechts
- 11: oberes Kühlerlager, links
- 11a: Rastelement
- 12: oberes Kühlerlager, rechts
- 12a: Rastelement
- 13: Kondensator
- 14: Lageröffnung
- 15: Gummibuchse
- 15a: Aufnahmeöffnung
- 15b: Flansch
- 16: Lagerzapfen, unten
- 16a: Anschlagplatte
- 17: Lagerzapfen, oben
- 18: Zwischenhalter
- 18a: Befestigungsauge
- 18b: Haltefinger
- 18c: Rastnase
- 18d: Anschlagfläche
- 18e: Abstütznase
- 18f: Flansch
- 18g: Bund
- 19: Gummibuchse
- 19a: Flansch
- 19b: Langloch

## Patentansprüche

1. Vorrichtung zur Befestigung eines Wärmeübertragers, insbesondere eines Kühlmittelkühlers (3) in einem rahmenförmig ausgebildeten Montageträger (2) eines Frontendmoduls (1) für ein Kraftfahrzeug, wobei der Montageträger (2) einen oberen Querträger (2a), zwei Seitenteile (2c, 2d) und vorzugsweise einen unteren Querträger (2b) und der Wärmeübertrager (3) im Wesentlichen vier Lager (9, 10, 11, 12) aufweist, die sich am Montageträger (2) elastisch abstützen, wobei am Wärmeübertrager (3) Lagerzapfen (16, 17) angeordnet sind, die in elastisch verformbaren Buchsen (15, 19) aufgenommen sind, und wobei die beiden oberen Lager (11, 12) Zwischenhalter (18) aufweisen, die mindestens einen Haltefinger (18b) umfassen, welcher mit dem Montageträger (2) lösbar verbunden, insbesondere verrastbar und/oder verklemmbar ist, **dadurch gekennzeichnet, dass** die Zwischenhalter (18) jeweils ein Befestigungsauge (18a) zur formschlüssigen Aufnahme der elastisch verformbaren Buchse (19) aufweisen.

2. Vorrichtung nach Anspruch 1, **dadurch gekennzeichnet, dass** der mindestens eine Haltefinger (18b) etwa rechtwinklig vom Lagerzapfen (17) abragt und eine frontseitig im Montageträger (2) angeordnete Öffnung (2h) durchsetzt.

3. Vorrichtung nach Anspruch 2, **dadurch gekennzeichnet, dass** der Zwischenhalter (18) zwei nebeneinander angeordnete, biegeelastische Haltefinger (18b) mit stirnseitigen Rastnasen (18c) aufweist, welche zwei frontseitige Öffnungen (2h) durchsetzen und hintergreifen.

4. Vorrichtung nach einem der Ansprüche 1 bis 3, **dadurch gekennzeichnet, dass** der Zwischenhalter (18) nach oben und unten (in z-Richtung) gegenüber dem Montageträger (2) abgestützt ist, insbesondere durch Verklemmen.

5. Vorrichtung nach einem der Ansprüche 1 bis 4, **dadurch gekennzeichnet, dass** der Zwischenhalter (18) zwischen den Haltefingern (18b) eine Hilfsbohrung (18h) für eine Hilfsbefestigung (fail-safe) aufweiset.

6. Vorrichtung nach einem der Ansprüche 1 bis 5, **dadurch gekennzeichnet, dass** die Buchse (19) im Zwischenhalter (18) ein den Lagerzapfen (17) aufnehmendes Langloch (19b) aufweist; welches ein Spiel des Lagerzapfens (17) quer zur Fahrtrichtung zulässt.

7. Vorrichtung nach einem der Ansprüche 2 bis 6, **dadurch gekennzeichnet, dass** das Befestigungsauge (18a) des Zwischenhalters (18) einen seitlichen Flansch (18f) aufweist, der sich nach oben (in z-Richtung) gegen Rippen (2f, 2g) des oberen Querträgers (2a) abstützt.

8. Vorrichtung nach einem der Ansprüche 1 bis 7, **dadurch gekennzeichnet, dass** das Befestigungsauge (18a) eine Abstütznase (18e) aufweist, welche sich nach unten (in z-Richtung) am Montageträger (2) abstützt.

9. Vorrichtung nach einem der vorhergehenden Ansprüche, **dadurch gekennzeichnet, dass** der Zwischenhalter (18) als Kunststoffspritzteil herstellbar ist.

10. Vorrichtung nach einem der vorhergehenden Ansprüche, **dadurch gekennzeichnet, dass** die unteren Lager (9, 10) als in z-Richtung elastische Festlager und die oberen Lager (11, 12) in z-Richtung als Loslager ausgebildet sind.

11. Vorrichtung nach Anspruch 10, **dadurch gekennzeichnet, dass** die Lagerzapfen (17) in den Büchsen (19) der oberen Lager (11, 12) ein Spiel s in z-Richtung aufweisen.

## Claims

1. Device for fastening a heat exchanger, in particular a coolant radiator (3) in a frame-like assembly support (2) of a front end module (1) for a motor vehicle, with the assembly support (2) having an upper transverse member (2a), two side parts (2c, 2d) and preferably one lower transverse member (2b), and the heat exchanger (3) having substantially four mounts (9, 10, 11, 12) which are elastically supported on the assembly support (2), with mounting pins (16, 17) being arranged on the heat exchanger (3), which mounting pins (16, 17) are held in elastically deformable bushes (15, 19), and with the two upper mounts (11, 12) having intermediate brackets (18) which comprise at least one retaining finger (18b) which is detachably connected, in particular can be latched and/or clamped, to the assembly support (2), **characterized in that** the intermediate brackets (18) in each case have a fastening eye (18a) for holding the elastically deformable bush (19) in a positively locking manner.

2. Device according to Claim 1, **characterized in that** the at least one retaining finger (18b) projects approximately perpendicularly from the mounting pin (17) and extends through an opening (2h) arranged in the front side of the assembly support (2).

3. Device according to Claim 2, **characterized in that** the intermediate bracket (18) has two resiliently elastic retaining fingers (18b) which are arranged adjacent to one another and have end-side latching lugs (18c) which extend through and engage behind two front-side openings (2h).

4. Device according to one of Claims 1 to 3, **characterized in that** the intermediate bracket (18) is supported at the top and at the bottom (in the z direction) relative to the assembly support (2), in particular by means of clamping.

5. Device according to one of Claims 1 to 4, **characterized in that** the intermediate bracket (18) has an auxiliary bore (18h) for an auxiliary fastening (fail-safe) between the retaining fingers (18b).

6. Device according to one of Claims 1 to 5, **characterized in that** the bush (19) in the intermediate bracket (18) has a slot (19b) which holds the mounting pin (17) and permits a degree of play of the mounting pin (17) transversely with respect to the direction of travel.

7. Device according to one of Claims 2 to 6, **characterized in that** the fastening eye (18a) of the intermediate bracket (18) has a lateral flange (18f) which is supported at the top (in the z direction) against ribs (2f, 2g) of the upper transverse member (2a).

8. Device according to one of Claims 1 to 7, **characterized in that** the fastening eye (18a) has a support lug (18e) which is supported at the bottom (in the z direction) on the assembly support (2).

9. Device according to one of the preceding claims, **characterized in that** the intermediate bracket (18) can be produced as a plastic injection-molded part.

10. Device according to one of the preceding claims, **characterized in that** the lower mounts (9, 10) are embodied as fixed mounts which are elastic in the z direction, and the upper mounts (11, 12) are embodied as floating mounts in the z direction.

11. Device according to Claim 10, **characterized in that** the mounting pins (17) in the bushes (19) of the upper mount (11, 12) have a degree of play s in the z direction.

## Revendications

1. Dispositif pour fixer un dispositif caloporteur, en particulier un radiateur pour agent réfrigérant (3) dans un support de montage (2) réalisé en forme de cadre d'un module de partie avant (1) d'un véhicule automobile, dans lequel le support de montage (2) présente un support transversal supérieur (2a), deux parties latérales (2c, 2d) et de préférence un support transversal inférieur (2b) et le dispositif caloporteur (3) présente essentiellement quatre paliers (9, 10, 11, 12), qui s'appuient élastiquement sur le support de montage (2), des tourillons de palier (16, 17) étant disposés sur le dispositif caloporteur (3) et étant reçus dans des douilles (15, 19) déformables élastiquement, les deux paliers supérieurs (11, 12) présentant des éléments de retenue intermédiaires (18) qui comprennent au moins un doigt de retenue (18b), qui est connecté de manière desserrable au support de montage (2), notamment par encliquetage et/ou serrage, **caractérisé en ce que** les éléments de retenue intermédiaires (18) présentent à chaque fois un oeillet de fixation (18a) pour recevoir par engagement par coopération de forme la douille (19) élastiquement déformable.

2. Dispositif selon la revendication 1, **caractérisé en ce que** l'au moins un doigt de retenue (18b) dépasse approximativement à angle droit du tourillon de palier (17) et traverse une ouverture (2h) disposée du côté avant dans le support de montage (2).

3. Dispositif selon la revendication 2, **caractérisé en ce que** l'élément de retenue intermédiaire (18) présente deux doigts de retenue (18b) flexibles élastiques disposés l'un à côté de l'autre avec des ergots d'encliquetage (18c) du côté frontal, qui traversent et viennent en prise par l'arrière avec deux ouvertures du côté frontal (2h).

4. Dispositif selon l'une quelconque des revendications 1 à 3, **caractérisé en ce que** l'élément de retenue intermédiaire (18) est supporté vers le haut et vers le bas (dans la direction z) par rapport au support de montage (2), notamment par serrage.

5. Dispositif selon l'une quelconque des revendications 1 à 4, **caractérisé en ce que** l'élément de retenue intermédiaire (18) présente, entre les doigts de retenue (18b) un alésage auxiliaire (18h) pour une fixation auxiliaire (fail-safe).

6. Dispositif selon l'une quelconque des revendications 1 à 5, **caractérisé en ce que** la douille (19) dans l'élément de retenue intermédiaire (18) présente un trou oblong (19b) recevant le tourillon de palier (17), qui autorise un jeu du tourillon de palier (17) transversalement à la direction de conduite.

7. Dispositif selon l'une quelconque des revendications 2 à 6, **caractérisé en ce que** l'oeillet de fixation (18a) de l'élément de retenue intermédiaire (18) présente une bride latérale (18f) qui s'appuie vers le haut (dans la direction z) contre des nervures (2f, 2g) du support transversal supérieur (2a).

8. Dispositif selon l'une quelconque des revendications 1 à 7, **caractérisé en ce que** l'oeillet de fixation (18a) présente un ergot de support (18e) qui s'appuie vers le bas (dans la direction z) sur le support de montage (2).

9. Dispositif selon l'une quelconque des revendications précédentes, **caractérisé en ce que** l'élément de retenue intermédiaire (18) peut être fabriqué sous forme de pièce moulée par injection de plastique.

10. Dispositif selon l'une quelconque des revendications précédentes, **caractérisé en ce que** les paliers inférieurs (9, 10) sont réalisés sous forme de paliers fixes élastiques dans la direction z et les paliers supérieurs (11, 12) sont réalisés sous forme de paliers libres dans la direction z.

11. Dispositif selon la revendication 10, **caractérisé en ce que** les tourillons de palier (17) présentent, dans les douilles (19) des paliers supérieurs (11, 12), un jeu s dans la direction z.
